# EUROPÄISCHE PATENTSCHRIFT

(11) **EP 3 507 117 B1**
(45) Veröffentlichungstag und Bekanntmachung des Hinweises auf die Patenterteilung: **03.03.2021**
(21) Anmeldenummer: 17749726.0
(22) Anmeldetag: 09.08.2017
(51) Int. Cl.: B60H 1/34, B60H 1/00, B60K 37/06, B60K 37/00, B60K 35/00

(54) **BEDIENEINRICHTUNG FÜR EIN KOMFORTSYSTEM EINES KRAFTFAHRZEUGS, KOMFORTSYSTEM MIT EINER BEDIENEINRICHTUNG UND KRAFTFAHRZEUG MIT EINEM KOMFORTSYSTEM**
CONTROL UNIT FOR A COMFORT SYSTEM OF A VEHICLE, COMFORT SYSTEM WITH SUCH CONTROL UNIT AND VEHICLE INTEGRATING SUCH COMFORT SYSTEM.
DISPOSITIF DE COMMANDE POUR UN SYSTÈME DE CONFORT, SYSTÈME DE CONFORT COMPRENANT UN TEL DISPOSITIF DE COMMANDE ET VÉHICULE COMPRENANT UN TEL SYSTÈME DE CONFORT

(30) Priorität: 01.09.2016 DE 102016216543
(43) Veröffentlichungstag der Anmeldung: 10.07.2019
(73) Patentinhaber: Audi AG, 85045 Ingolstadt (DE)
(72) Erfinder: HÉLOT, Jacques, 85051 Ingolstadt (DE)
(86) Internationale Anmeldenummer: PCT/EP2017/070233
(87) Internationale Veröffentlichungsnummer: WO 2018/041573

(56) Entgegenhaltungen:
- EP-A1- 2 208 645
- EP-A1- 2 891 955
- WO-A1-2009/089092
- DE-A1- 10 352 044
- DE-A1-102011 010 229
- DE-A1-102014 014 118
- DE-A1-102015 004 062
- US-A1- 2016 176 264

## Beschreibung

Die Erfindung betrifft ein Komfortsystem eines Kraftfahrzeugs, wobei eine Bedieneinrichtung einen berührungssensitiven Bildschirm mit einer Bedienfläche aufweist. Eine Bedieneinrichtung ist dabei eine Gerätekomponente oder ein Bauteil, die oder das zum Empfangen einer Bedienhandlung eines Benutzers und zum Erzeugen eines die empfangene Bedienhandlung beschreibendes Bediensignal eingerichtet ist. Unter einem Komfortsystem wird im Folgenden ein Gerät des Kraftfahrzeugs verstanden, das eine Komforttechnik umfasst, beispielsweise eine Belüftung, Heizung, Klimatisierung, ein Diebstahlschutzsystem, einen Fensterheber, Türöffner, eine Verdeckbetätigung, eine Einrichtung zum Verstellen eines Kraftfahrzeugsitzes, einen Außenspiegel, ein Fahrerassistenzsystem oder ein Infotainmentsystem.

Zum Bedienen solcher Komfortsysteme gibt es Bildschirme ("Displays"), die in eine Richtung gebogen werden können, dabei also beispielsweise eine Zylinderform aufweisen. Solche Bedienbildschirme sind bis dato jedoch immer separat und stehen nicht in Bezug zu dem zu bedienenden Gerät.

Aus der DE 10 2015 005 126 B3 ist ein Bedienelement zum Bedienen einer Klimaanlage eines Fahrzeugs bekannt, wobei das Ausströmvolumen mittels einer berührungsempfindlichen Betätigungsfläche des Bedienelements eingestellt wird. Hierzu weist das Bedienelement eine Schiebereglerfunktion auf. Bedienteil und Bedienfläche des Bedienelements sind neben einer Luftdüse angeordnet.

Die FR 3 028 810 A1 beschreibt eine Auslassdüse für eine Klimaanlage eines Fahrzeugs, bei dem ebenfalls ein berührungssensitiver Bildschirm an der Auslassdüse angeordnet ist. Das Display ist dabei an eine der Lamellen der Auslassdüse befestigt.

Die DE 10 2015 004 062 A1 beschreibt eine Luftzufuhreinrichtung im Kraftfahrzeug, wobei eine der Lamellen eine Schiebereglerfunktion haben kann. Die Lamelle kann dabei eine berührungsempfindliche Oberfläche aufweisen.

Die DE 10 2011 010 229 A1 beschreibt eine Vorrichtung zur Bedienung mehrerer unterschiedlicher Funktionen eines Kraftfahrzeugs, mit einer berührungssensitiven Anzeigefläche, auf der zumindest ein Teil der bedienbaren Funktionen mittels jeweiliger, der jeweiligen Funktion zugeordneten Symbolen anzeigbar sind.

Die Bedieneinrichtungen aus dem Stand der Technik lösen entweder die obigen Nachteile nicht, oder sie erfordern das Berühren einer Lamelle, wobei der Benutzer aus Versehen durch zu viel Druck eine Lamellenstellung ändern kann.

Eine der Erfindung zugrundeliegende Aufgabe ist das Bereitstellen einer bauraumsparenden Bedieneinrichtung, die einer Fehlbedienung des Komfortsystems vorbeugt.

Die Aufgabe wird gelöst durch das erfindungsgemäße Komfortsystem und das erfindungsgemäße Kraftfahrzeug gemäß den nebengeordneten Patentansprüchen. Vorteilhafte Weiterbildungen sind durch die Unteransprüche gegeben.

Der Erfindung liegt die Idee zugrunde, den Bildschirm als Rahmen auszugestalten und ganz oder größtenteils um ein Bauteil herum anzuordnen. Neben der Einsparung von Bauraum kann einer Fehlbedienung nahezu vollständig vorgebeugt werden.

Das erfindungsgemäße Komfortsystem ist gekennzeichnet durch die unten beschriebene Bedieneinrichtung. Dabei umrahmt der berührungssensitive Bildschirm das Bauteil des Komfortsystems ganz oder größtenteils.

Die Bedieneinrichtung für das Komfortsystem eines Kraftfahrzeugs weist einen berührungssensitiven Bildschirm mit einer Bedienfläche auf, wobei der berührungssensitive Bildschirm als Rahmenelement für ein Bauteil des Komfortsystems ausgestaltet ist. Der berührungssensitive Bildschirm ist dazu ausgestaltet, das Bauteil ganz oder zumindest teilweise oder größtenteils zu umrahmen. Das Bauteil ist, mit anderen Worten, ein von dem Bildschirm verschiedenes Bauteil. Beispielsweise kann der berührungssensitive Bildschirm als streifenförmiges und/oder gekrümmtes Rahmenelement ausgestaltet sein.

Die Bedieneinrichtung weist mindestens zwei mechanische Bedienelemente auf, die innerhalb eines durch das Rahmenelement gebildeten Rahmens angeordnet sind, wobei jeweils ein Bedienbereich der Bedienfläche zum Zuordnen einer Bedienfunktion zu mindestens einem der mechanischen Bedienelemente eingerichtet ist. Der jeweilige Bedienbereich zeigt die durch das mechanische Bedienelement auslösbare Funktion an, und der berührungssensitive Bildschirm ist dazu eingerichtet, eine Bedienhandlung zum Ändern einer Zuordnung einer durch das jeweilige mechanische Bedienelement auszulösenden Funktion zu dem jeweiligen mechanischen Bedienelement zu empfangen. So kann auf sehr geringem Bauraum eine Kombination der Bedieneinrichtung mit den mechanischen Bedienelementen bereitgestellt werden, womit viele Funktionen des Komfortsystems betrieben oder gesteuert werden können.

Beispielsweise können Bedienbereiche, die überhalb der mindestens zwei mechanischen Bedienelemente angeordnet sein können, anzeigen, welche Funktionen der mechanischen Bedienelementen gerade aktivierbar sein können. In Abhängigkeit von beispielsweise einer Wischgeste können den mindestens zwei mechanischen Bedienelementen dann andere Funktionen zugeordnet werden. Hierdurch wird die Vielzahl an bedienbaren Funktionen des Komfortsystems deutlich erhöht.

Ein Vorteil besteht darin, dass eine moderne Technologie mit einem modernen Design kombiniert wird. Durch die Synergie zwischen dem Bildschirm und dem Bauteil beziehungsweise zwischen dem Bildschirm und dem Komfortsystem ergibt sich eine verbesserte Ergonomie. Außerdem ist einem Benutzer sofort ersichtlich, was die Funktion des Bildschirms ist. Die erfindungsgemäße Bedieneinrichtung spart außerdem Bauraum ein und erfordert geringere Maßketten. Durch die Reduktion des benötigten Bauraums ergibt sich auch für den Benutzer ein verbessertes Innenraumgefühl in dem Kraftfahrzeug. Im Gegensatz zu einem unübersichtlichen Bildschirm, auf dem alle möglichen Funktionen aller oder mehrerer Komfortsysteme angezeigt und mit dem verschiedene Komfortsysteme bedient werden können, ist die Bedieneinrichtung wesentlich übersichtlicher und erleichtert ein schnelles Bedienen des Komfortsystems. Weiterhin kommt dem Bildschirm eine Designfunktion zu. Die Bedieneinrichtung wirkt auf den Benutzer wie eine optische Reduktion an Einflüssen, womit ein Interieur des Kraftfahrzeugs beruhigt wird. Bedieneinrichtung und Komfortsystem werden sinnvoll in den Innenraum des Kraftfahrzeugs integriert.

Durch die Bedieneinrichtung wird auch eine bessere und schnellere Bedienung des Komfortsystems ermöglicht und eine Blindbedienung begünstigt, insbesondere wenn haptisch wahrnehmbare Elemente an der Bedieneinrichtung und/oder dem Bildschirm angeordnet sind, beispielsweise Formen, die die Finger des Benutzers eingrenzen können.

Der berührungssensitive Bildschirm kann gemäß einer weiteren Ausführungsform als volumetrischer Bildschirm ("volumetrisches Display") oder Volumenbildschirm ("Volumendisplay") oder als Bildschirm mit einer veränderbaren äußeren Gestalt ausgestaltet sein. Ein volumetrischer Bildschirm ist dabei zum Beispiel ein Stereo-Bildschirm oder ein 3D-Bildschirm. Ein Volumenbildschirm ist ein graphisches Anzeigegerät, das eine visuelle Darstellung eines Objekts in allen drei Dimensionen ermöglicht. Ein Bildschirm mit einer veränderbaren äußeren Gestalt ist ein Bildschirm, der seine äußere Gestalt und damit die Gestalt der Bedienoberfläche verändern kann und auch als "morphendes" Display bezeichnet werden.

Durch eine solche plastische Darstellung von beispielsweise Symbolen, die eine Funktion des Komfortsystems darstellen können, können die Symbole gut sichtbar angezeigt werden, insbesondere wenn beispielsweise die Bedienfläche in dem Kraftfahrzeug vom Benutzer aus gesehen schräg angeordnet ist.

Gemäß einer bevorzugten Ausführungsform kann die Bedienfläche eine gekrümmte und/oder gewölbte Oberfläche aufweisen und/oder der Bildschirm kann als Ringdisplay ausgestaltet sein. Unter einem Ringdisplay wird dabei ein ringförmiger oder einen geschlossenen Rahmen bildender Bildschirm verstanden. Im Gegensatz zu einer flachen, ebenen Bedienfläche kann die Bedienung komfortabler und ergonomischer erfolgen, da beispielsweise der Benutzer in einem günstigeren Winkel auf die Bedienfläche fassen kann oder die Bedienfläche aufgrund der gekrümmten und/oder gewölbten Oberfläche besser ertasten kann. Hierdurch wird also auch eine Blindbedienung des Komfortsystems verbessert. Zusätzlich durch die bessere Ergonomie erfolgt die Integration der Bedieneinrichtung von Designaspekten aus gesehen schöner.

Eine weitere Ausführungsform des erfindungsgemäßen Komfortsystems sieht vor, dass das Bauteil eine Tastenleiste sein kann. Solches Komfortsystem wird von dem Benutzer besonders häufig während einer Fahrt benutzt und eignen sich gut für das erfindungsgemäße Prinzip. Das entsprechende Komfortsystem kann dabei beispielhaft eine Klimaanlage, ein Belüftungssystem, ein Diebstahlschutzsystem, also zum Beispiel eine Schließanlage, oder eine mechanische Bedieneinrichtung, die eine von der Bedieneinrichtung separate Bedieneinrichtung darstellen kann, sein.

In einer weiteren Variante kann das Komfortsystem eine elektronische Feststellbremse, ein Fensterheber, oder eine Schaltung sein, die zur Verbesserung der Anzeige ein Konturdisplay aufweisen können. Der berührungssensitive Bildschirm kann beispielsweise ein informativer oder dekorativer Bildschirm sein, der beispielsweise um einen Lautsprecher oder einen Tassenhalter oder ein Kombiinstrument angeordnet sein kann, beispielsweise zum Anzeigen einer Temperatur der Tasse oder eines Fahrmodus, beispielsweise eines "drive select"-Modus, oder zur farblichen Wiedergabe von Musik.

Die oben gestellte Aufgabe wird ebenfalls gelöst von einem Kraftfahrzeug, das vorzugsweise als Kraftwagen ausgestaltet sein kann, beispielsweise als Personenkraftwagen. Das erfindungsgemäße Kraftfahrzeug weist eine Ausführungsform des erfindungsgemäßen Komfortsystems auf und erreicht die bereits oben genannten Vorteile.

Eine einem Innenraum zugewandte Seite eines Innenraumverkleidungsteils des Kraftfahrzeugs und eine durch den Benutzer sichtbare Stirnseite des Bauteils des Komfortsystems liegt in zwei verschiedenen Ebenen, wobei die Bedienfläche der erfindungsgemäßen Bedieneinrichtung die beiden Ebenen verbindet. Die beiden Ebenen können vorzugsweise parallel zueinander liegen. Das Innenraumverkleidungsteil kann auch als Innenraumverkleidungselement oder Innenraumverkleidungsbauteil bezeichnet werden. Es ergibt sich vorteilhaft, dass die Bedieneinrichtung haptisch ertastbar wird. Eine Hand des Benutzers kann in die Bedieneinrichtung greifen oder in den durch das Rahmenelement gebildeten Innenraum eingeführt werden. Eine Hand oder ein Finger des Benutzers kann dabei während der Bedienung geführt werden, was eine Blindbedienung weiter ermöglicht.

In einer Weiterbildung kann das Bauteil in dem Innenraumverkleidungsteil versenkt sein oder aus dem Innenraumverkleidungsteil herausragen. dadurch werden die oben genannten Effekte verstärkt.

Die Erfindung wird anhand der beigefügten Zeichnungen noch einmal durch konkrete Ausführungsbeispiele näher erläutert. Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Funktionsgleiche Elemente weisen in den Figuren dieselben Bezugszeichen auf. Es zeigt:
- Fig. 1: eine schematische Skizze zu einer ersten Ausführungsform der Bedieneinrichtung, des Komfortsystems und des Kraftfahrzeugs;
- Fig. 2: eine schematische Skizze zu einer weiteren Ausführungsform der Bedienvorrichtung, des Komfortsystems, und dem Kraftfahrzeug;
- Fig. 3-8: jeweils eine schematische Skizze zu jeweils einer weiteren Ausführungsform der Bedieneinrichtung; und
- Fig. 9, 10: jeweils eine schematische Skizze zu jeweils einer weiteren Ausführungsform der Bedieneinrichtung im Querschnitt.

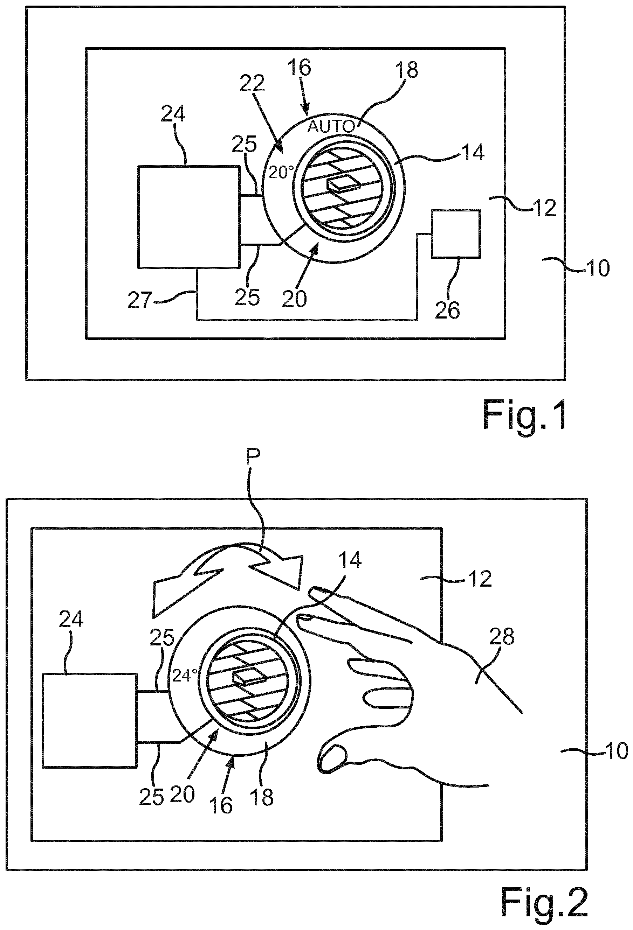

Die Fig. 1 veranschaulicht schematisch das Prinzip der Vorrichtungen und zeigt dabei ein Kraftfahrzeug 10, beispielsweise einen Personenkraftwagen, der ein Komfortsystem 12 aufweist. Das Komfortsystem 12 kann im Beispiel der Fig. 1 ein Belüftungssystem des Kraftfahrzeugs sein. Das Kraftfahrzeug 10 kann alternativ oder zusätzlich ein Komfortsystem 12 aufweisen, was beispielsweise als Klimaanlage, Diebstahlschutzsystem oder elektrischer Fensterheber ausgestaltet sein kann. Das Komfortsystem 12 weist ein Bauteil 14 auf, das im Beispiel der Fig. 1 als Luftdüse ausgestaltet sein kann.

Die Fig. 1 zeigt ebenfalls eine Bedieneinrichtung 16, die einen berührungssensitiven Bildschirm 18 aufweist. Der berührungssensitive Bildschirm 18 weist eine Bedienfläche 20 auf, auf der beispielhaft mehrere Symbole 22 dargestellt sein können. Diese Symbole 22 können beispielsweise eine Temperaturangabe ("20°C") oder ein Lüftungssymbol oder eine automatische Funktion ("Auto") darstellen.

Der berührungssensitive Bildschirm 18 kann dabei beispielsweise durch eine dem Fachmann bekannte Technologie zum Herstellen eines biegbaren Displays bereitgestellt werden. Vorzugsweise kann der berührungssensitive Bildschirm 18 dabei Pixel aufweisen, wobei der berührungssensitive Bildschirm 18 ebenfalls einen Treiber für jeden Pixel aufweisen kann. Ein sogenannter "Chip am Display", also ein Mikrochip oder Mikrocontroller an dem Bildschirm, ist dem Fachmann aus dem Stand der Technik bekannt.

Der berührungssensitive Bildschirm 18 kann zum Beispiel ein sogenanntes "OLED"-Display ("organischer Leuchtdioden-Bildschirm") oder als Bildschirm mit einer Dünnschichttransistor-Ansteuerung ("thin-film transisted display", "TFT") ausgestaltet sein. Alternativ ist zum Beispiel ein Spiegelsystem oder eine Mehrzahl hintereinander angeordneter OLEDs möglich.

Alternativ kann der Bildschirm 18 auch als volumetrischer Bildschirm oder Volumenbildschirm ausgestaltet sein. Technologien sind dem Fachmann zum Bereitstellen eines volumetrischen Displays oder Volumendisplays aus dem Stand der Technik bekannt. Hierzu können beispielsweise Lichtpunkte im Raum beschrieben und dargestellt werden, zum Beispiel über leuchtende Voxel in Gas, Nebel oder auf einer schnell rotierenden Milchglasscheibe beziehungsweise -helix. Alternativ können dabei beispielsweise mehrere Flüssigkristallanzeigen benutzt werden.

Bildschirme (18) mit einer veränderbaren Gestalt sind dem Fachmann aus dem Stand der Technik bekannt und können zum Beispiel aus sechsseitigen Anzeigewürfel aufgebaut sein, die zusammen verkettet sind und einzeln oder gruppiert bewegt werden können, um die Ausgestaltung der Anzeigeoberfläche zu ändern und so zum Beispiel eine raue oder stufige Bedienoberfläche bereitzustellen

Der Bildschirm 18 kann beispielsweise bei einer Montage auf eine Stirnseite des Komfortsystems 12 aufgeklipst oder aufgeklebt werden. Die Fig. 1 zeigt eine optionale Steuereinrichtung 24 des Komfortsystems 12, also eine Einrichtung des Komfortsystems 12, die zum Erzeugen von Steuersignalen und damit zum Betreiben und Steuern des Komfortsystems 12 ausgestaltet ist und beispielsweise einen Mikrochip oder Mikroprozessor aufweisen kann. Diese Steuereinrichtung 24 kann über eine Signalübertragungsverbindung 25 mit dem Bildschirm 18 und mit dem Bauteil 14 verbunden sein.

Die Fig. 1 zeigt ebenfalls eine optionale Stromversorgung 26, die beispielsweise eine Batterie aufweisen kann. Diese Stromversorgung 26 kann dann mittels einer physikalischen Verdrahtung 27 mit beispielsweise einer Steuerplatine der Steuereinrichtung 24 verbunden sein. Mithilfe einer solchen Stromversorgung 26 kann das Komfortsystem 12 auch dann bedient werden, wenn eine Zündung des Kraftfahrzeugs 10 gerade ausgeschaltet ist.

Die Bedieneinrichtung 16 kann optional zum Beispiel eine eigene Steuerelektronik und/oder zum Beispiel Halteelemente oder Rastelemente aufweisen, also beispielsweise Haken oder Ösen zum Befestigen der Bedieneinrichtung 16. Die beispielhafte Steuerelektronik und die beispielhaften Rastelemente sind in der Fig. 1 nicht gezeigt. Optional kann die Bedieneinrichtung 16 zum Beispiel auch ein Gehäuse aufweisen, das in der Fig. 1 ebenfalls nicht gezeigt ist.

Bei dem Beispiel in der Fig. 2 kann es sich dabei um ein entsprechendes Beispiel handeln, wie bereits oben zur Fig. 1 beschrieben, wobei im Folgenden nur auf die Unterschiede eingegangen wird. Die Fig. 2 zeigt ein Ausführungsbeispiel, in dem ein Benutzer 28 mit seiner Hand gerade an den berührungssensitiven Bildschirm 18 greift. Die Bedienhandlung, zum Beispiel ein Drehen der Bedieneinrichtung 16 oder ein kreisförmiges Wischen über die Bedienfläche 20 ist durch den Pfeil P gekennzeichnet. Die Bedieneinrichtung 16 kann zum Beispiel drehbar um das Bauteil 14 herum gelagert sein, sodass der Benutzer 28 die Bedieneinrichtung 16 greifen und drehen kann. Bei der beispielhaften Wischgeste kann der Benutzer 28 beispielsweise mit dem Finger über die Bedienfläche 20 streichen und so beispielsweise eine andere Temperatur einstellen. Der Bildschirm 18 kann für eine bessere Ergonomie zum Beispiel statisch oder drehbar gelagert sein und beispielsweise derart ausgestaltet sein, dass bei einer Bedienung eine haptische Rückmeldung gegeben werden kann.

Im Beispiel der Fig. 1 und der Fig. 2 können die Bedieneinrichtung 16 und/oder der Bildschirm 18 gebogen und rund ausgestaltet sein. Mit anderen Worten können die Bedieneinrichtung 16 und/oder der Bildschirm 18 als gebogener, runder Streifen um das Bauteil 14 angeordnet sein. Dabei kann eine Ebene, in der eine Stirnseite des Bauteils 14 liegen kann, zum Beispiel parallel zu einer Ebene des Innenraumverkleidungsteils liegen (in den Fig. 1 und Fig. 2 nicht gezeigt), sodass der an dem Bauteil 14 angeordnete Bildschirm 18 zum Benutzer hin gewölbt sein kann.

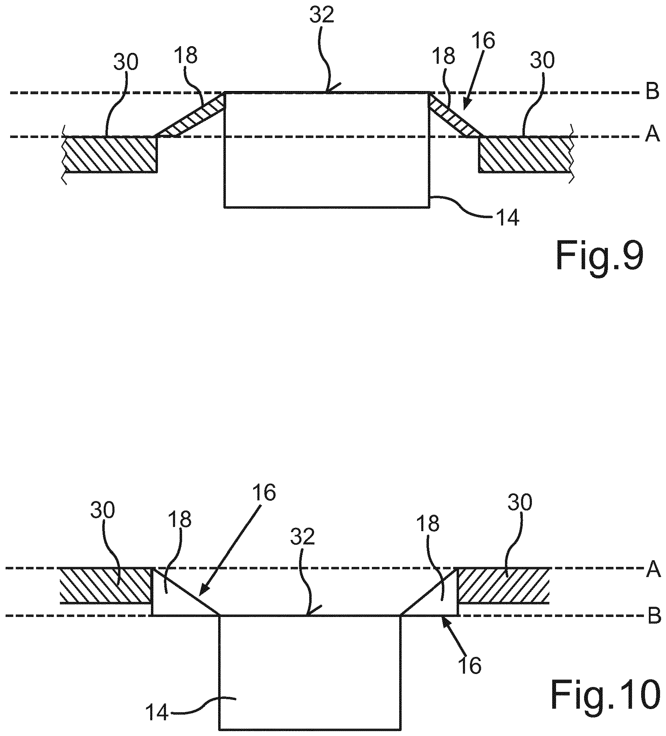

Eine solche Bedieneinrichtung ist in der Fig. 9 noch einmal beispielhaft im Querschnitt gezeigt. Die Fig. 9 zeigt die Ebene A eines Innenraumverkleidungsteils 30, beispielsweise ein Verkleidungsteil eines Armaturenbretts des Kraftfahrzeugs 10, sowie eine Ebene B, in der die Stirnseite 32 des Bauteils 14 liegen kann. Im Beispiel der Fig. 9 sind dabei die Ebenen A und B beispielhaft parallel zueinander gezeigt.

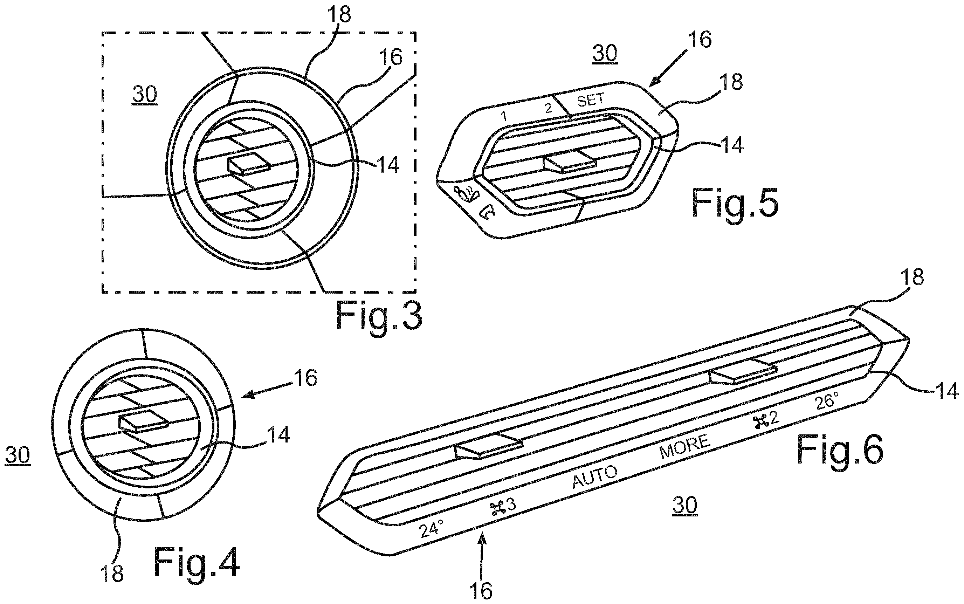

Die Fig. 3 zeigt ein Beispiel einer Bedieneinrichtung 16, in der das Bauteil 14 beispielsweise in das Innenraumverkleidungsteil 30 hineinversenkt sein kann. Der Bildschirm 18 und/oder die Bedieneinrichtung 16 können dabei beispielhaft wieder als runder Streifen ausgestaltet sein, der im Falle der Fig. 3 nach innen gewölbt sind. Aus Gründen der Übersichtlichkeit wurde dabei in der Fig. 3, wie auch in den folgenden Fig. 4 bis 8, darauf verzichtet, die einzelnen Komponenten des Komfortsystems 12 und das Kraftfahrzeug 10 darzustellen. Die in den Fig. 3 bis 8 gezeigten Bedieneinrichtungen 16 stellen also Ausführungsbeispiele dar, die mit dem Kraftfahrzeug 10 kombiniert werden können.

Die Fig. 10 zeigt im Querschnitt noch einmal ein in der Fig. 3 gezeigtes, in das Innenraumverkleidungsteil 30 versenktes Bauteil 14, wodurch die Ebene B der Stirnseite 32 des Bauteils 14 wieder beispielhaft parallel zu der Ebene A das Innenraumverkleidungsteil 30 dargestellt ist.

Die Fig. 4 zeigt eine Bedieneinrichtung 16, die, wie in Fig. 1 bis Fig. 3, als runder Streifen ausgestaltet sein kann, und beispielhaft um eine Luftdüse als Bauteil 14 angeordnet sein kann. Im Beispiel der Fig. 4 kann die Stirnseite des Bauteils 14 in der gleichen Ebene liegen wie die Ebene A des Innenraumverkleidungsteils 30, und die Bedieneinrichtung 16 und der Bildschirm 18 können rund und flach ausgestaltet sein.

Die beispielhaften Bedieneinrichtungen 16 der Fig. 1 bis Fig. 4 können beispielsweise als Ring-Touchdisplay um eine Luftdüse ausgestaltet sein, wobei der beispielhafte Bildschirm 18 in zwei Richtungen zum Beispiel drehbar oder bedienbar ausgestaltet sein kann. Eine solche Bedieneinrichtung 16 kann beispielsweise an einem Dachmodul angeordnet sein, beispielsweise zum Bedienen eines Schiebedachs, einer Leuchte, und kann beispielsweise zusätzliche Funktionen anbieten wie das Absetzen eines Notrufes oder das Anrufen eines Verkehrsclubs.

Die Fig. 5 zeigt eine Bedieneinrichtung 16 mit einem Bildschirm 18, dessen Form an die Konturen an die beispielhafte Luftdüse angepasst sein kann. Im Falle der Fig. 5 kann der Bildschirm also als eckig abgewinkelter Streifen ausgestaltet sein.

Das Bauteil 14 der Fig. 6 ist beispielhaft eine Breitbanddüse einer Klimaanlage, und entsprechend kann der Bildschirm 18 als breiter Rahmen ausgestaltet sein, der an den Enden eckig gebogen sein kann.

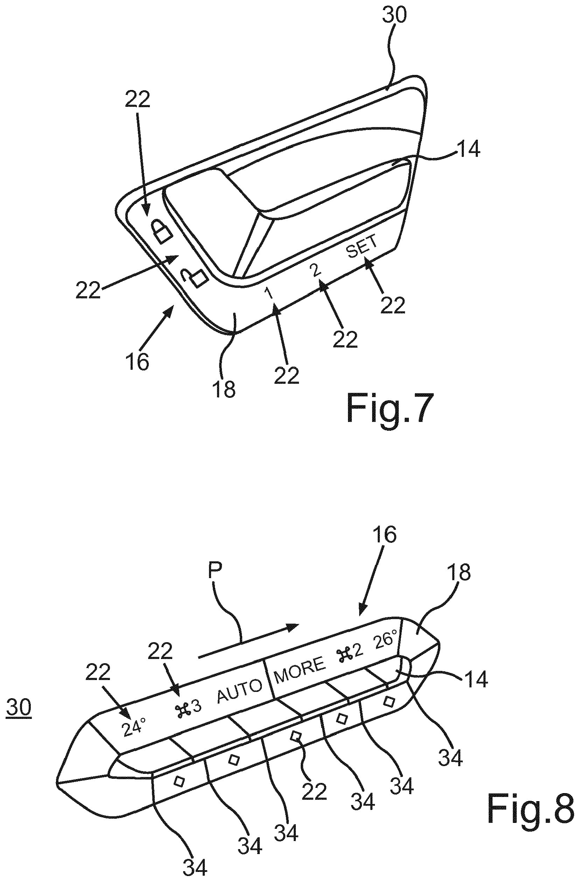

Beispielhaft zeigt die Fig. 7 ein in zwei Richtungen gebogenes Band-Touchdisplay als Bildschirm 18 um einen Türöffner als Bauteil 14. Dabei umrandet der Bildschirm 18 das Bauteil 14 nicht vollständig. Der Bildschirm 18 kann gemäß dem Beispiel der Fig. 7 als L-förmiger Streifen ausgestaltet sein und mögliche Funktionen zum Bedienen des beispielhaften Türöffners anzeigen. Beispielhaft durch ein Symbol 22 eines geschlossenen Schlosses dargestellt kann die Bedieneinrichtung 16 eine Funktion zum Schließen des Kraftfahrzeugs anzeigen, durch das Symbol 22 eines geöffneten Schlosses ein Öffnen des Kraftfahrzeugs, wie beispielsweise Funktionen zum Einstellen voreingestellter Sitzpositionen eines Kraftfahrzeugsitzes ("1 ", "2") und/oder eine Funktion "SET" zum Programmieren einer dritten voreingestellten Sitzposition.

Im Beispiel der Fig. 8 ist eine Bedieneinrichtung 16 gezeigt, deren Bildschirm 18 als breites Band oder als breiter Streifen ausgestaltet sein kann. Der Bildschirm 18 kann beispielsweise als volumetrisches Display oder Volumendisplay um eine Tastenleiste als Bauteil 14 angeordnet sein, wobei die beispielhafte Tastenleiste mehrere mechanische Kipptasten 34 aufweisen kann. Auf dem Bildschirm 18 kann über jeder Kipptaste 34 ein Symbol 22 angezeigt sein. Aus Gründen der Übersichtlichkeit sind nicht alle Symbole 22 mit Bezugszeichen versehen. Die Symbole 22, die überhalb jeder mechanischen Kipptaste 34 angezeigt werden können, können beispielsweise jeweils diejenige Funktion anzeigen, die der entsprechend darunterliegenden Kipptaste 34 zugeordnet sein kann. Beispielhaft kann die linke Kipptaste 34 ein Einstellen einer Temperatur auf 24 Grad Celsius auslösen. Zusätzlich kann das Display 18 auch unterhalb jeder Kipptaste 34 jeweils ein Symbol 22 anzeigen, das jedoch eine momentan nicht der jeweiligen Kipptaste 34 zugeordnete Funktion beschreiben kann. Streicht der Benutzer 28 (in der Fig. 8 nicht gezeigt) beispielsweise in der Richtung P über den Bildschirm 18, so können die entsprechenden Symbole 22 in die Richtung P verschoben werden. Hierdurch kann der Benutzer 28 beispielsweise so weit streichen, bis diejenigen Funktionen, die er nun durch die Kipptasten 34 bedienen möchte, oberhalb der Kipptaste 34 positioniert sein können.

Alternativ kann beispielsweise vorgesehen sein, dass die Funktionen wechseln, sobald das Kraftfahrzeug 10 gestartet wird. Auf diese Weise können die Kipptasten 34 beispielsweise mit Funktionen belegt werden, die während der Fahrt sinnvoll sein können.

Alternativ kann vorgesehen sein, dass der Bildschirm 18 in dem Beispiel der Fig. 8 nur eine gestalterische Funktion einnehmen kann, jedoch über die Kipptasten 34 bedient werden kann. In einer weiteren Variante kann beispielsweise eine Jukebox oder eine Massagefunktion während eines pilotierten Verfahrens des Kraftfahrzeugs 10 oberhalb der Kipptasten 34 angezeigt werden.

Die obigen Ausführungsbeispiele veranschaulichen das Prinzip der Erfindung, ein Konturdisplay an einem Bauteil 14, beispielsweise an einem physikalisches Objekt oder beispielsweise an einem Interfaceelement, bereitzustellen.

Gemäß einem weiteren Ausführungsbeispiel wird ein Bildschirm 18 oder Bildschirme 18 um das Bauteil 14, beispielsweise um ein physikalisches Objekt oder ein Interfaceelement, angeordnet. Der Bildschirm 18 oder die Bildschirme 18 können dabei genau einer Kontur des Elementes, also der Kontur des Bauteils 14, folgen. Zwischen dem Bildschirm 18 und dem Bauteil 14 kann es eine Interaktion geben, zum Beispiel kann ein Ringdisplay um eine Luftdüse dazu eingerichtet sein, eine Klimafunktion zu bedienen.

Gemäß einem weiteren Ausführungsbeispiel kann beispielsweise ein Displaytreiber direkt auf dem Bildschirm 18 sein.

Gemäß weiteren Ausführungsbeispielen kann der Bildschirm 18 beispielsweise als Bildschirm eines Multi-Media-Interfaces ("MMI") um eine Luftdüse ausgestaltet sein, beispielsweise als morphes Display, also als Bildschirm, der die Gestalt ändern kann, oder als statisches Display. Alternativ kann zum Beispiel der Bildschirm 18 als Ringdisplay um einen Tassenhalter oder einen Tankdeckel oder einen Ladedeckel eines Elektrokraftfahrzeugs ausgestaltet sein, wobei der Bildschirm 18 beispielsweise eine Temperatur oder einen Kühlungszustand einer eingestellten Tasse oder einer verbleibenden Ladezeit anzeigen kann. Hierzu kann die Bedieneinrichtung beispielsweise mit einem entsprechenden Sensor des Tassenhalters oder des Tanks verbunden sein.

Gemäß weiteren Ausführungsbeispielen kann der Bildschirm 18 beispielsweise um einen Türgriff einer Außenseite des Kraftfahrzeugs 10 angeordnet sein oder als Ringdisplay, also als ringförmiger Bildschirm 18, um ein Dachmodul oder eine Leselampe und zum Beispiel zur Bedienung des Dachmoduls und/oder der Leselampe und/oder zur Beleuchtung ausgestaltet sein.

Ist der Bildschirm 18 beispielsweise als Ringdisplay um ein Fensterhebersystem angeordnet, kann der Bildschirm 18 beispielsweise anzeigen, welche Fenster mit einzelnen Fensterhebern bedient werden können. Ein beispielhaftes Ringdisplay um eine elektrische Feststellbremse kann beispielsweise einen Status oder eine aktuelle Einstellung der Feststellbremse anzeigen.

Gemäß weiteren Ausführungsbeispielen kann der Bildschirm 18 beispielsweise ringförmig oder als geschlossener Rahmen um oder an einem Handgriff eines Ganghebels oder um ein Shift-by-wire-System angeordnet sein und zum Beispiel einen aktuell eingestellten Gang oder alle verfügbaren Gangeinstellungen anzeigen. Ist der Bildschirm 18 beispielsweise um ein Hauptdisplay eines Kombi-Instruments angeordnet, kann der Bildschirm 18 beispielsweise eine Temperaturanzeige, Tankanzeige, Reichweitenanzeige, einen Fahrmodus (zum Beispiel "Sport" oder "Komfort") oder eine Warnlampe anzeigen.

## Patentansprüche

1. Komfortsystem (12) für ein Kraftfahrzeug (10), **gekennzeichnet durch**
- ein Bauteil (14), das mindestens zwei mechanische Bedienelemente aufweist, und
- eine Bedieneinrichtung (16) für das Komfortsystem (12), die einen berührungssensitiven Bildschirm (18) mit einer Bedienfläche (20) aufweist,
**dadurch gekennzeichnet, dass**
der berührungssensitive Bildschirm (18) als Rahmenelement für das Bauteil (14) ausgestaltet ist und das Bauteil (14) des Komfortsystems (12) ganz oder größtenteils umrahmt; wobei jeweils ein Bedienbereich der Bedienfläche (20) zum Zuordnen einer Bedienfunktion zu mindestens einem der mechanischen Bedienelemente eingerichtet ist, der jeweilige Bedienbereich die durch das mechanische Bedienelement auslösbare Funktion anzeigt, und der berührungssensitive Bildschirm (18) dazu eingerichtet ist, eine Bedienhandlung zum Ändern einer Zuordnung einer durch das jeweilige mechanische Bedienelement auszulösenden Funktion zu dem jeweiligen mechanischen Bedienelement zu empfangen.

2. Komfortsystem (12) nach Anspruch 1, **dadurch gekennzeichnet, dass** das Bauteil (14) eine Tastenleiste ist.

3. Komfortsystem (12) nach Anspruch 1 oder 2, wobei der berührungssensitive Bildschirm (18) als volumetrischer Bildschirm und/oder Volumenbildschirm und/oder als Bildschirm (18) mit einer veränderbaren Gestalt ausgestaltet ist und/oder eine gekrümmte und/oder gewölbte Oberfläche aufweist.

4. Komfortsystem (12) nach einem der Ansprüche 1 bis 3, wobei der Bildschirm (18) als Ringdisplay ausgestaltet ist.

5. Kraftfahrzeug (10), **gekennzeichnet durch**
ein Komfortsystem (12) nach einem der Ansprüche 1 bis 4, wobei eine einem Innenraum zugewandte Seite eines Innenraumverkleidungsteils des Kraftfahrzeugs (10) und eine durch einen Benutzer (28) sichtbare Stirnseite des Bauteils (14) des Komfortsystems (12) in zwei verschiedenen Ebenen liegen, wobei die Bedienfläche (20) die beiden Ebenen verbindet.

6. Kraftfahrzeug (10) nach Anspruch 5, **dadurch gekennzeichnet, dass** das Bauteil (14) in dem Innenraumverkleidungsteil (30) versenkt ist oder aus dem Innenraumverkleidungsteil (30) heraussteht.

## Claims

1. Comfort system (12) for a motor vehicle (10), **characterised by**
- a component (14), which has at least two mechanical operating elements, and
- an operating device (16) for the comfort system (12), having a touch sensitive-screen (18) comprising an operating surface (20),
**characterised in that**
the touch-sensitive screen (18) is designed as a frame element for the component (14) and entirely or largely frames the component (14) of the comfort system (12); wherein an operating area of the operating surface (20) is configured to assign an operating function to at least one of the mechanical operating elements, and the respective operating area displays the function that can be triggered by the mechanical operating element, and the touch-sensitive screen (18) is configured to perform an operating action to change an assignment of a function to be triggered by the respective mechanical operating element, to receive the respective mechanical operating element.

2. Comfort system (12) according to claim 1, **characterised in that** the component (14) is a button bar.

3. Comfort system (12) according to claim 1 or 2, wherein the touch-sensitive screen (18) is designed as a volumetric screen and/or volume screen and/or screen (18) with a changeable shape and/or has a curved and/or domed surface.

4. Comfort system (12) according to one of claims 1 to 3, wherein the screen (18) is designed as a ring display.

5. Motor vehicle (10), **characterised by**
a comfort system (12) according to one of claims 1 to 4, wherein a side of an interior trim part of the motor vehicle (10) facing an interior space and an end face of the component (14) of the comfort system (12) visible to a user (28) lie in two different planes, wherein the operating surface (20) connects the two planes.

6. Motor vehicle (10) according to claim 5, **characterised in that** the component (14) is sunk into the interior trim part (30) or protrudes from the interior trim part (30).

## Revendications

1. Système de confort (12) pour un véhicule automobile (10), **caractérisé par**
- un composant (14), qui présente au moins deux éléments de commande mécaniques, et
- un dispositif de commande (16) pour le système de confort (12), qui présente un écran tactile (18) avec une surface de commande (20),
**caractérisé en ce que**
l'écran tactile (18) est conçu en tant qu'élément de cadre pour le composant (14) et encadre complètement ou largement le composant (14) du système de confort (12) ; dans lequel une zone de commande respective de la surface de commande (20) est configurée pour affecter une fonction de commande à au moins un des éléments de commande mécaniques, la zone de commande respective affiche la fonction pouvant être déclenchée par l'élément de commande mécanique, et l'écran tactile (18) est configuré pour recevoir une action de commande pour modifier une affectation d'une fonction devant être déclenchée par l'élément de commande mécanique respectif à l'élément de commande mécanique respectif.

2. Système de confort (12) selon la revendication 1, **caractérisé en ce que** le composant (14) est une barre de boutons.

3. Système de confort (12) selon la revendication 1 ou 2, dans lequel l'écran tactile (18) est conçu en tant qu'écran volumétrique et/ou écran de volume et/ou en tant qu'écran (18) de forme modifiable et/ou présente une surface courbe et/ou incurvée.

4. Système de confort (12) selon l'une quelconque des revendications 1 à 3, dans lequel l'écran (18) est conçu en tant qu'affichage annulaire.

5. Véhicule automobile (10), **caractérisé par**
un système de confort (12) selon l'une quelconque des revendications 1 à 4, dans lequel un côté d'une partie d'habillage intérieur du véhicule automobile (10) faisant face à un intérieur et une face frontale du composant (14) du système de confort (12) visible par un utilisateur (28) se trouvent dans deux plans différents, dans lequel la surface de commande (20) connecte les deux plans.

6. Véhicule automobile (10) selon la revendication 5, **caractérisé en ce que** le composant (14) est encastré dans la partie d'habillage intérieur (30) ou dépasse de la partie d'habillage intérieur (30).
